# EUROPEAN PATENT APPLICATION

(11) **EP 1 903 700 A2**
(43) Date of publication of application: **26.03.2008**
(21) Application number: 07116847.0
(22) Date of filing: 20.09.2007
(51) Int. Cl.: H04H 60/72, H04H 60/15, H04H 60/82

(54) **Apparatus and method for configuring partial broadcasting guide information**

(30) Priority: 20.09.2006 KR 20060091480
(71) Applicant: Samsung Electronics Co., Ltd., Suwon-si, Gyeonggi-do 442-743 (KR)
(72) Inventor: Lee, Kyung-Shin, Gyeonggi-do (KR); Jeon, Jin-Woo, Gyeonggi-do (KR); Kim, Young-Jip, Gyeonggi-do (KR); Kim, Hyun-Chul, Gyeonggi-do (KR); Jung, Ji-Wuck, Gyeonggi-do (KR)
(74) Representative: Grünecker, Kinkeldey, Stockmair & Schwanhäusser Anwaltssozietät

(57) **Abstract**

An apparatus and method for configuring partial broadcasting guide information in a digital broadcasting system is disclosed. The apparatus includes a terminal and a broadcasting service providing server. The terminal transmits a connection request and a partial broadcasting guide information delivery request. The broadcasting service providing server responds to the connection request, performs user authentication using a password received from the terminal upon receipt of the partial broadcasting guide information delivery request, performs broadcasting guide information filtering in order to acquire partial broadcasting guide information if the user authentication is successful, and provides the partial broadcasting guide information to the terminal.

## Description

The present invention generally relates to a digital broadcasting system. More particularly, the present invention relates to an apparatus and method for selecting broadcasting guide information that is valid for a user based on user information and transmitting the selected broadcasting guide information to a mobile communication terminal that receives digital broadcasting.

A broadcasting service for a mobile communication terminal such as Digital Multimedia Broadcasting (DMB) or Digital Video Broadcasting-Handheld (DVB-H) transmits broadcasting guide information such as an Electronic Program Guide (EPG) or an Electronic Service Guide (ESG) for DMB in order to provide detailed information.

A user can selectively receive broadcasting guide information if the user desires to do so. In other words, the user may select and receive only partial broadcasting guide information that is valid for the user instead of the entire broadcasting guide information. To this end, information that can be searched for in the broadcasting guide information, such as a particular genre or a particular keyword, may be used as selection condition information.

For the broadcasting guide information, data corresponding to 1 day, 7 days, or more days may be transmitted. As the number of channels increases, the amount of data to be transmitted also increases, increasing the time required for receiving, analyzing, and showing the data to the user. To solve this problem, it is necessary to transmit only information of interest to the user, i.e., only a portion of the entire broadcasting guide information. For example, information that is filtered based on a particular period, a particular genre, or a particular actor/actress of interest to the user may be provided to the user. However, such filtering may not be suitable for every user and the best way may be to provide information suitable for each user in order to provide a service of superior quality to each user.

An aspect of the present invention is to address at least the above problems and/or disadvantages and to provide at least the advantages described below. Accordingly, the object of the present invention is to provide an apparatus and method for configuring broadcasting guide information that is suitable for each user.

This object is solved by the subject matter of the independent claims.

Preferred embodiments are defined in the dependent claims.

According to one aspect of the present invention, a digital broadcasting system including a terminal and a broadcasting service providing server is provided. The terminal transmits a connection request and a partial broadcasting guide information delivery request. The broadcasting service providing server responds to the connection request, performs user authentication using a password received from the terminal upon receipt of the partial broadcasting guide information delivery request, performs broadcasting guide information filtering in order to acquire partial broadcasting guide information if the user authentication is successful, and provides the partial broadcasting guide information to the terminal.

According to another aspect of the present invention, a method for configuring partial broadcasting guide information in a digital broadcasting system is provided. The method includes transmitting, by a terminal, a connection request, receiving, by a broadcasting service providing server, the connection request and transmitting a response to the connection request, transmitting, by the terminal, a partial broadcasting guide information delivery request after receiving the response to the connection request, performing, by the broadcasting service providing server, user authentication after receiving the partial broadcasting guide information delivery request, and transmitting the partial broadcasting guide information data from the terminal to the broadcasting service providing server if the user authentication is successful.

The above object and other aspects, features and advantages of the present invention will be more apparent from the following detailed description of certain exemplary embodiments taken in conjunction with the accompanying drawings, in which:
FIG. 1 is a block diagram illustrating the structure of an apparatus for configuring partial broadcasting guide information in a digital broadcasting system according to an exemplary embodiment of the present invention; and
FIG. 2 is a ladder diagram illustrating a method for configuring partial broadcasting guide information in a digital broadcasting system according to an exemplary embodiment of the present invention.

Throughout the drawings, the same drawing reference numerals will be understood to refer to the same elements, features and structures.

The following description with reference to the accompanying drawings is provided to assist in a comprehensive understanding of certain exemplary embodiments of the invention. Accordingly, those of ordinary skill in the art will recognize that various changes and modifications of the embodiment described herein can be made without departing from the scope and spirit of the invention. Also, descriptions of well-known functions and constructions are omitted for clarity and conciseness.

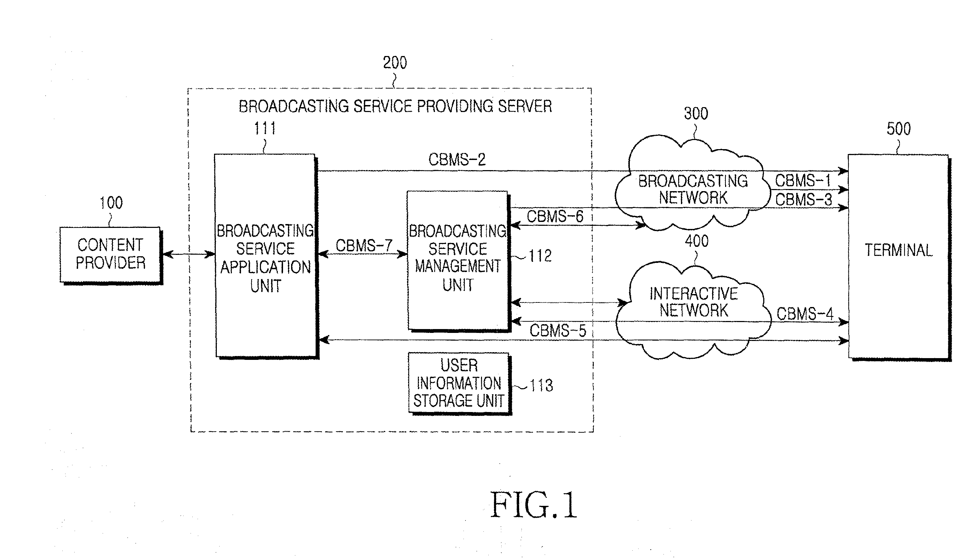

FIG. 1 is a block diagram illustrating the structure of an apparatus for configuring partial broadcasting guide information in a digital broadcasting system according to an exemplary embodiment of the present invention. Although not limited to this standard, for purposes of explanation the Digital Video Broadcasting-Handheld (DVB-H) standard is used.

A terminal 500 receives and displays digital broadcasting. A broadcasting service providing server 200 generates and broadcasts a Transport Stream (TS) corresponding to content provided by a content provider 100.

The broadcasting service providing server 200 includes a broadcasting service application unit 111, a broadcasting service management unit 112, and a user information storage unit 113. The broadcasting service application unit 111 transmits an AudioNideo (AV) stream and file data to the terminal 500 through a broadcasting network 300, and the broadcasting service management unit 112 transmits Electronic Service Guide (ESG) data to the terminal 500 through an interactive network 400 such as CBMS-4. As shown in FIG. 1, the broadcasting guide information may be transmitted through the broadcasting network 300 such as convergence of broadcast and mobile service-2 (CBMS-2) and CBMS-3 or may be filtered in order to transmit broadcasting guide information that is specialized for a user through the interactive network 400. User information may be information such as user age or purchase information stored in the user information storage unit 113. Since the user information should not be used illegally, it is desirable to provide a service to a user who is verified as an authorized user by user authentication.

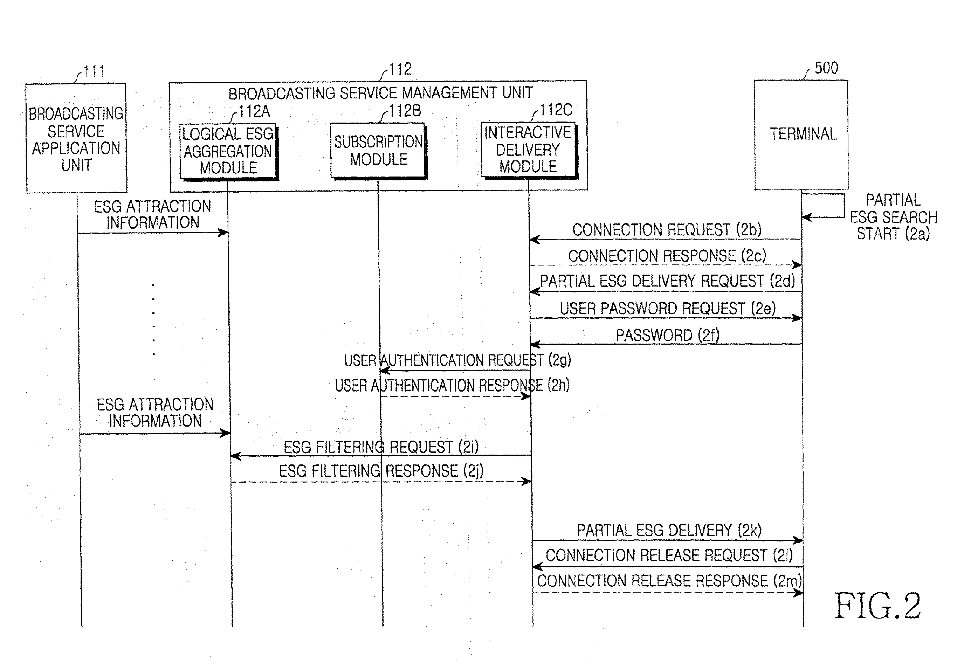

FIG. 2 is a ladder diagram illustrating a method for configuring partial broadcasting guide information in a digital broadcasting system according to an exemplary embodiment of the present invention.

When the user selects a partial ESG search in the terminal 500 in step 2a, the terminal 500 transmits a connection request to the broadcasting service providing server 200 in step 2b. The broadcasting service providing server 200 transmits a connection response to the terminal 500 in step 2c. When the terminal 500 transmits a partial ESG delivery request to the broadcasting service providing server 200 in step 2d, the broadcasting service providing server 200 performs ESG filtering and delivers partial ESG information to the terminal 500 in steps 2e through 2k. When the terminal 500 transmits a connection release request to the broadcasting service providing server 200 in step 21, the broadcasting service providing server 200 transmits a connection release response to the terminal 500 in step 2m.

Communication between the terminal 500 and the broadcasting service providing server 200 is made through the interactive network 400, and an interactive delivery module 112C of the broadcasting service management unit 112 of the broadcasting service providing server 200 may be configured to communicate with the terminal 500. The broadcasting service providing server 200 includes a logical ESG aggregation module 112A and a subscription module 112B in addition to the interactive delivery module 112C. The logical ESG aggregation module 112A includes a partial ESG generator (not shown) in order to perform ESG filtering according to a given condition, e.g., the user information according to an exemplary embodiment of the present invention, and generate partial ESG information.

After the terminal 500 transmits the partial ESG delivery request to the broadcasting service providing server 200, the terminal 500 and the broadcasting service providing server 200 may exchange a password. In other words, the broadcasting service providing server 200 that receives the partial ESG delivery request may transmit a user password request to the terminal 500 in step 2e and the terminal 500 transmits a user password to the broadcasting service providing server 200 in step 2f. The broadcasting service providing server 200 then performs user authentication using the received password.

More specifically, the interactive delivery module 112C of the broadcasting service management unit 112 of the broadcasting service providing server 200 exchanges a password with the terminal 500 through the interactive network 400. In the broadcasting service management unit 112, user authentication is performed between the interactive delivery module 112C and the subscription module 112B. In other words, if the interactive delivery module 112C receiving the password transmits a user authentication request to the subscription module 112B in step 2g, the subscription module 112B transmits a user authentication response to the interactive delivery module 112C in step 2h.

After the user authentication, the broadcasting service management unit 112 performs ESG filtering in order to acquire partial ESG information. More specifically, the interactive delivery module 112C of the broadcasting service management unit 112 transmits an ESG filtering request to the logical ESG aggregation module 112A in step 2i and the logical ESG aggregation module 112A then transmits an ESG filtering response to the interactive delivery module 112C in step 2j.

An ESG source (not shown) of the service application unit 111 transmits ESG attraction information to the logical ESG aggregation module 112A of the broadcasting service management unit 112. The logical ESG aggregation module 112A updates ESG information by referring to the ESG attraction information. The subscription module 1128 manages user purchase information, e.g., channels.

When a connection between the terminal 500 and the broadcasting service providing server 200 is made through the interactive network 400, a screen displayed on the terminal 500 is similar to that displayed during connection to a Web browser. A process of setting information that is to be used for filtering broadcasting guide information after successful connection is also performed through the interactive network 400 and the information may also be set by the user on the Web browser. If the information that is set by the user is included in ESG information, e.g., a particular genre or a particular period, steps 2e through 2h are not performed.

An encryption process may be additionally performed during the exchange of the user password and a Secure Hypertext Transfer Protocol (S-HTTP) may be used.

As described above, according to certain exemplary embodiments of the present invention, user authentication is performed when partial broadcasting guide information is configured using user information, thereby protecting the user information and conveniently configuring the partial broadcasting guide information so that it is suitable for each user.

While the invention has been shown and described with reference to certain exemplary embodiments thereof, it will be understood by those skilled in the art that various changes in form and details may be made therein without departing from the scope of the invention, as defined by the appended claims.

## Claims

1. A digital broadcasting system comprising:
a terminal for transmitting a connection request and a partial broadcasting guide information delivery request; and
a broadcasting service providing server for responding to the connection request, performing user authentication using a password received from the terminal upon receipt of the partial broadcasting guide information delivery request, performing broadcasting guide information filtering in order to acquire partial broadcasting guide information if the user authentication is successful, and providing the partial broadcasting guide information to the terminal.

2. The digital broadcasting system of claim 1, wherein the terminal and the broadcasting service providing server communicate through an interactive network.

3. The digital broadcasting system of claim 1 or 2, wherein the broadcasting service providing server receives the password by transmitting a password request to the terminal.

4. The digital broadcasting system of one of claims 1 to 3, wherein, when the terminal transmits a connection release request to the broadcasting service providing server, the broadcasting service providing server transmits a response to the connection release request to the terminal.

5. A method for configuring partial broadcasting guide information in a digital broadcasting system, the method comprising:
transmitting, by the terminal, a connection request;
receiving, by a broadcasting service providing server, the connection request and transmitting a response to the connection request;
transmitting, by the terminal, a partial broadcasting guide information delivery request after receiving the response to the connection request;
performing, by the broadcasting service providing server, user authentication after receiving the partial broadcasting guide information delivery request; and
transmitting the partial broadcasting guide information data from the terminal to the broadcasting service providing server if the user authentication is successful.

6. The method of claim 5, further comprising:
transmitting, by the terminal, a connection release request after receipt of the partial broadcasting guide information data; and
transmitting, by the broadcasting service providing server, a response to the connection release request.

7. The method of claim 5 or 6, further comprising:
transmitting, by the broadcasting service providing server, a password request after receiving the partial broadcasting guide information delivery request; and
receiving a password from the terminal,
wherein the user authentication is performed using the password.

8. A method for providing partial broadcasting guide information, comprising:
receiving a partial broadcasting guide information delivery request;
performing user authentication; and
transmitting partial broadcasting guide information data if the user authentication is successful.

9. The method of claim 8, further comprising:
receiving a connection request; and
transmitting a response to the connection request.

10. The method of claim 8 or 9, further comprising:
transmitting a user password request after receiving the partial broadcasting guide information delivery request; and
receiving a user password in respect to the user password request.

11. The method of claim 10, wherein the user authentication is performed using the user password.

12. The method of one of claims 8 to 11, further comprising filtering broadcast guide information to generate partial broadcasting guide information based on the user authentication.

13. The method of one of claims 8 to 12, further comprising:
receiving a connection release request; and
transmitting a response to the connection release request.
